# EUROPEAN PATENT APPLICATION

(11) **EP 1 838 079 A2**
(43) Date of publication of application: **26.09.2007**
(21) Application number: 07101184.5
(22) Date of filing: 25.01.2007
(51) Int. Cl.: H04N 1/00, H04M 1/00

(54) **Apparatus and method for inputting data in mobile terminal**

(30) Priority: 24.03.2006 KR 20060026765
(71) Applicant: Samsung Electronics Co., Ltd., Suwon-si, Gyeonggi-Do (KR)
(72) Inventor: Lee, Kyoung-Ho, Gyeonggi-do (KR)
(74) Representative: Grünecker, Kinkeldey, Stockmair & Schwanhäusser Anwaltssozietät

(57) **Abstract**

A method and apparatus for inputting data in a mobile terminal is provided. In the method, the mobile terminal includes scanning data using an external input device and storing the scanned data; requesting the stored data to the external input device when an event for inputting data is detected in the mobile terminal-, and displaying the received data on a position of a screen in the mobile terminal when the requested data is received from the external input device. The mobile terminal can easily input and store external data, and can display and store data at a target position of an actual application program.

## Description

The present invention generally relates to an apparatus and method for inputting data in a mobile terminal, and in particular, to an apparatus and method for inputting data in a mobile terminal using an external input device.

The use of the mobile terminals is wide spread, as they are becoming more compact, small-sized and lightweight. Service providers (terminal manufacturers) have made an effort to develop mobile terminals with more convenient functions for the purpose of attracting potential users. For example, touch screen type mobile terminals have been developed which can input data using a user's finger or an external input device. An external input device can be an auxiliary input device used to make text or draw a line.

An external input device used in a mobile terminal can input data by selecting a specific menu displayed on a display unit or directly making text. In addition, an external input device can provide a function of moving data from a specific position to another position within a same mobile terminal.

Such an external input device provides the function of moving data only within a single mobile terminal. Thus, when the mobile terminal requires data (e.g., image, text, short message) stored in another mobile terminal or computer, users must directly input the required data or use a data cable or Infrared Data Association (IrDA) communication to move the required data. However, a data moving method using a data cable is inconvenient because a user must connect a mobile terminal to a computer, and a data moving method using lrDA communication is problematic because data can be moved only between mobile terminals with the same lrDA technology. In addition, when a mobile terminal requires data contained in books, the above-described methods cannot be used. Therefore, a user is inconvenienced by having to input the data directly.

The present invention has been designed to substantially solve at least the above problems and/or disadvantages and to provide at least the advantages below. Accordingly, the object of the present invention is to provide an apparatus and method for inputting data in a mobile terminal.

This object is solved by the subject matter of the independent claims.

Preferred embodiments are defined in the dependent claims.

An aspect of the present invention is to provide an apparatus and method for scanning data using an external input device in a mobile terminal.

A further aspect of the present invention is to provide an apparatus and method for inputting data using a scan type external input device in a mobile terminal.

According to one aspect of the present invention, a method for inputting data in a mobile terminal includes scanning data using an external input device and storing the scanned data therein; requesting the stored data from the external input device when the mobile terminal detects an event for data input; and displaying the received data on a predetermined position of a screen of the mobile terminal when the requested data is received from the external input device.

According to another aspect of the present invention, an apparatus for inputting data in a mobile terminal includes an external input device for scanning and storing data; and a mobile terminal for receiving data stored in the external input device when an event for data input from the external input device is detected, and displaying the received data on a position of a screen.

The present invention will become more apparent from the following detailed description when taken in conjunction with the accompanying drawings in which:
FIG. 1 is a block diagram of a mobile terminal according to the present invention;
FIG. 2 is a block diagram of an external input device according to the present invention;
FIG. 3 is a flowchart illustrating a method for scanning data in the external input device according to the present invention;
FIG. 4 is a flowchart illustrating a method for inputting data in the mobile terminal according to the present invention; and
FIG. 5 is a flowchart illustrating a method for transferring data in the external input device according to the present invention.

Preferred embodiments of the present invention will be described herein below with reference to the accompanying drawings. In the following description, well-known functions or constructions are not described in detail since they would obscure the invention in unnecessary detail.

An apparatus and method for inputting data in a mobile terminal using a scan type external input device will be described in detail. The mobile terminal and the scan type external input device transmit and receive signals using a near field communication. Examples of the mobile terminal may include cellular phones, Personal Communication System (PCS) phones, Personal Data Assistants (PDAs), and International Mobile Telecommnication-2000 (IMT-2000) terminals.

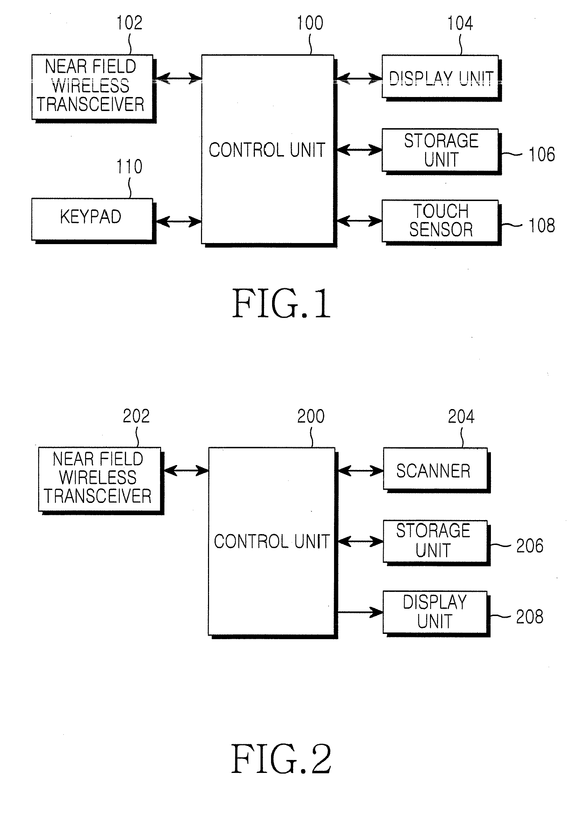

FIG. 1 shows a mobile terminal according to the present invention. The mobile terminal includes a control unit 100, a near field wireless transceiver 102, a display unit 104, a storage unit 106, a touch sensor 108, and a keypad.

The control unit 100, which can be a processor unit or the like, processes and controls a voice communication and a data communication. When the control unit 100 detects the contact of a scan type external input device, it generates an event for data input and enables the near field wireless transceiver 102. The control unit 100 receives data from the external input device through the near field wireless transceiver 102 and controls a function of displaying and/or storing the received data on the display unit 104.

The near field wireless transceiver 102 encodes a signal input from the control unit 100 to transmit the encoded signal to the external input device through the near field communication, and decodes a signal input through the near field communication to transmit the decoded signal to the control unit 100. Examples of the near field communication may include Bluetooth communication, Wireless LAN (WLAN) communication, Ultra Wideband (UWB) communication, and Infrared Data Association (lrDA) communication. For IrDA communication, a transmitter may use an lrDA light emitting diode and a receiver may use an IrDA photo diode.

The display unit 104 displays status information of the mobile terminals, numerals and characters, moving pictures and still pictures, and so on. The display unit 104 displays a data list stored in the external input device and data received from the external input device. In addition, the display unit 104 displays a position at which the data received from the external input device is to be input.

The storage unit 106 includes a program memory, a data memory, and a nonvolatile memory. The program memory stores a program for controlling an overall operation of the mobile terminal. A flash memory may be used as the program memory. The data memory temporarily stores data generated during operations of the mobile terminal. A random access memory (RAM) may be used as the data memory. The nonvolatile memory stores system parameters and backup data. The storage unit 106 stores data received from the external input device.

Like the keypad, the touch sensor 108 can provide a plurality of function keys and performs a corresponding function by detecting a touch. Specifically, the touch sensor 108 detects the contact of the external input device, determines a position selected by the external input device, and provides data of the selected position to the control unit 100. The keypad 110 includes a plurality of function keys and provides a key input data corresponding to a key that is pressed by a user to the control unit 100.

FIG. 2 shows an external input device according to the present invention. The external input device includes a control unit 200, a near field wireless transceiver 202, a scanner 204, a storage unit 206, and a display unit 208.

The control unit 200 processes and controls a data scanning and a data communication. In addition, the control unit 200 displays scanned data on the display unit 208 and/or stores the scanned data in the storage unit 206, and transmits the scanned data to the mobile terminal according to the control of the mobile terminal.

The near field wireless transceiver 202 encodes a signal input from the control unit 200 to transmit the encoded signal to the mobile terminal through the near field communication, and decodes a signal input through the near field wireless communication to transmit the decoded signal to the control unit 200. Examples of the near field communication may include Bluetooth communication, WLAN communication, UWB communication, and IrDA communication. For lrDA communication, a transmitter may use an IrDA light emitting diode and a receiver may use an lrDA photo diode.

The scanner 204 has a photo diode or a laser diode. The scanner 204 scans data stored in an external device or an external document data under control of the control unit 200 and provides the scanned data to the control unit 200.

The storage unit 206 includes a program memory, a data memory, and a nonvolatile memory. The program memory stores a program for controlling an overall operation of the external input device. A flash memory may be used as the program memory. The data memory temporarily stores data generated during operations of the external input device. A RAM may be used as the data memory. The nonvolatile memory stores system parameters and backup data. In particular, the storage unit 206 stores the scanned data.

The display unit 208 displays status information of the external input device, numerals and characters, and so on. The display unit 208 displays the scanned character or text data.

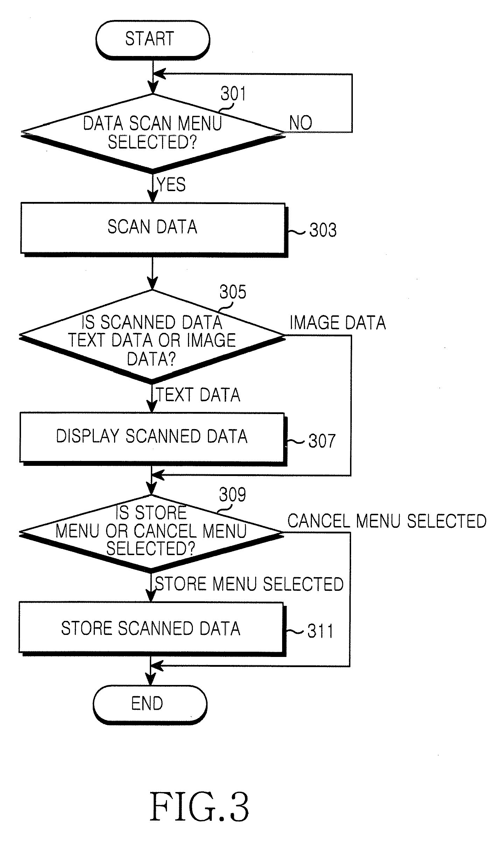

FIG. 3 shows a method for scanning data in the external input device according to the present invention. The control unit 200 of the external input device determines if a data scan menu is selected according to a user's key manipulation in step 301. In step 303, when the data scan menu is selected, the control unit 200 switches the external input device to a scan mode and scans data using the scanner 204. Examples of data may include data displayed on the display unit of the mobile terminal or computer, and text or pictures of the books.

In step 305, the control unit 200 determines if the scanned data is image data or text data. When the scanned data is the text data, the control unit 200 displays the scanned text data on the display unit 208 in step 307, and determines if a data store menu or a cancel menu is selected according to the user's key manipulation in step 309. When the scanned data is the image data in step 305, the process proceeds to step 309.

When the data store menu is selected in step 309, the control unit 200 stores the scanned data in the storage unit 206 in step 311. When the cancel menu is selected in step 309, the control unit 200 does not store the scanned data in the storage unit 206. Then, the control unit 200 terminates the process.

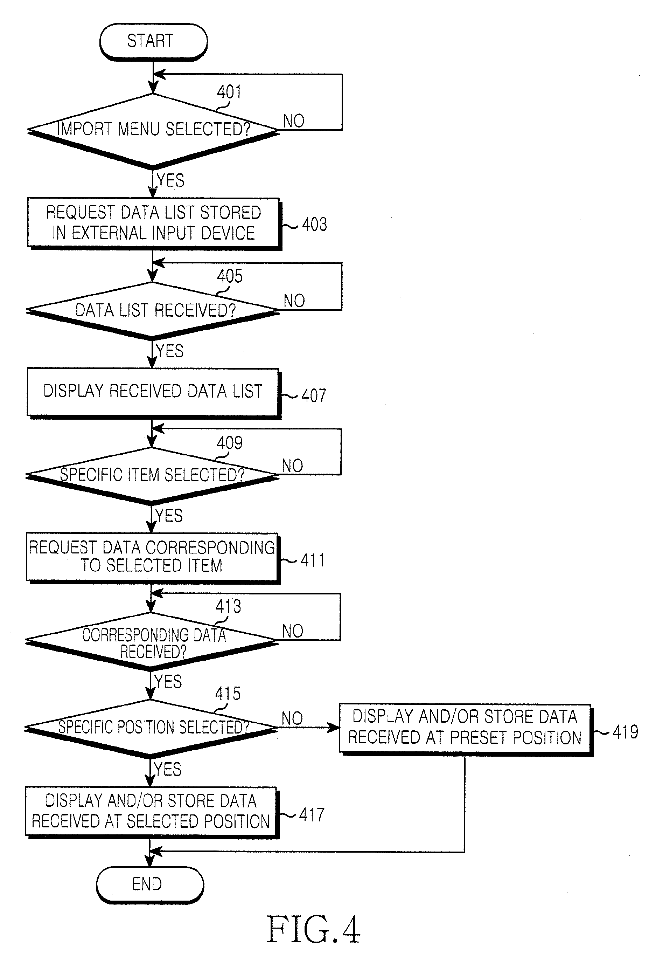

FIG. 4 shows a method for inputting data in the mobile terminal according to the present invention. In step 401, the control unit 100 of the mobile terminal determines whether a menu for importing data from an external input device is enabled by selecting a specific position of the mobile terminal by the external input device. The data to be imported may be data that are scanned from another mobile terminal, computer or book, and then are stored in the external input device.

In step 403, when the import menu is selected, the control unit 100 requests the external input device to transfer the stored data list by using the near field wireless transceiver 102.

In step 405, the control unit 100 determines whether the data list is received from the external input device through the near field wireless transceiver 102. When the data list is received, the control unit 100 displays the received data list on the display unit 104 in step 407.

In step 409, the control unit 100 determines whether the user selects an item for importing one of the stored data list to the mobile terminal. When the item is selected, the control unit 100 requests the external input device to transfer data corresponding to the selected item by using the near field wireless transceiver 102 in step 411.

In step 413, the control unit 100 determines whether the data corresponding to the selected item is received from the external input device through the near field wireless transceiver 102. When the data corresponding to the selected item is received, the control unit 100 determines whether a specific position of the display unit 104 is selected by the external input device in step 415. When the specific position is selected, the control unit 100 calculates the specific position selected by the external input device, and the control unit 100 displays the received data on the selected specific position and/or stores the received data.

For example, when a text input window of the display unit 104 is selected by the external input device during operation of a specific application program that allows text input in the mobile terminal, the control unit 100 can display text data received from the external input device on the text input window. In addition, when a photo album is selected in the mobile terminal by the external input device, the control unit 100 can display and/or store the received data on the photo album.

When the specific position is not selected by the external input device in step 415, the control unit 100 displays the received data on a preset position and/or stores the received data in step 419. The preset position can be set and modified by the user. Then, the control unit 100 terminates the process.

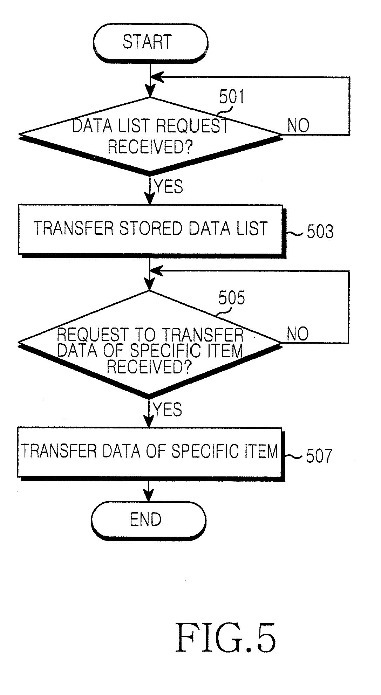

FIG. 5 shows a method for transferring data in the external input device according to the present invention. In step 501, the control unit 200 of the external input device determines whether a request to transfer a stored data list is received from the mobile terminal through the near field wireless transceiver 202. When a request is received, the control unit 200 transmits the data list stored in the storage unit 206 to the mobile terminal through the near field wireless transceiver 202 in step 503.

In step 505, the control unit 200 determines whether a request to transfer data corresponding to a specific item is received from the mobile terminal through the near field wireless transceiver 202. When the request is received, the control unit 200 detects data corresponding to the specific item from the storage unit 206 and transmits the detected data to the mobile terminal through the near field wireless transceiver 202 in step 507. Then, the control unit 200 terminates the process.

As described above, because the mobile terminal inputs and/or stores external data using the external input device that can scan the data, data stored in the external input device can be easily input and/or stored in the mobile terminal, regardless of the communication schemes of the external input devices. The mobile terminal can display or store the data of the external device at a position desired by the user on the real application program. The mobile terminal can conveniently transmit small-sized data stored in the external input device.

While the invention has been shown and described with reference to certain preferred embodiments thereof, it will be understood by those skilled in the art that various changes in form and details may be made therein without departing from the scope of the invention as defined by the appended claims.

## Claims

1. A method for inputting data in a mobile terminal, comprising the steps of:
scanning data using an external input device and storing the scanned data therein;
requesting the stored data to the external input device when the mobile terminal detects an event for data input; and
displaying the received data on a position of a screen of the mobile terminal when the requested data is received from the external input device.

2. The method of claim 1, wherein the requesting step comprises the steps of:
requesting a previously stored data list to the external input device;
displaying the received data list when the data list is received from the external input device; and
requesting transfer of a selected item to the external input device when any one item of the displayed data list is selected.

3. The method of claim 1 or 2, wherein the mobile terminal detects the event for the data input when a specific position of the mobile terminal screen is selected by the external input device.

4. The method of one of claims 1 to 3, wherein the mobile terminal and the external input device transmit and receive data using a near field communication network.

5. The method of claim 4, wherein the near field communication network includes at least one of Bluetooth communication, WLAN communication, Ultra Wideband communication, and Infrared Data Association communication.

6. An apparatus for inputting data in a mobile terminal, comprising:
an external input device for scanning and storing data; and
a mobile terminal for receiving data stored in the external input device when an event for data input from the external input device is detected, and displaying the received data on a position of a screen.

7. The apparatus of claim 6, wherein the external input device comprises:
a scanner for scanning data;
a storage unit for storing the scanned data; and
a near field wireless transceiver for transferring the stored data to the mobile terminal when the mobile terminal requests the stored data from the external input device.

8. The apparatus of claim 6 or 7, wherein the mobile terminal comprises:
a display unit for displaying the received data;
a touch sensor for sensing a contact between the external input device and the display unit;
a near field wireless transceiver for receiving data from the external input device through a near field communication; and
a controller for driving the near field wireless transceiver by generating the event for data input when contact of the external input device with a position where the data is input is detected, and displaying the data received through the near field wireless transceiver on the position where the data is input.

9. A method for inputting data in a mobile terminal, comprising the steps of:
requesting to send stored data to an external input device;
receiving the stored data from the external input device using a near field communication network; and
displaying the received data on a position of a screen of the mobile terminal.

10. The method of claim 9, wherein the requesting step comprises the steps of:
requesting a stored data list to the external input device;
displaying the received data list when the data list is received from the external input device; and
requesting transfer of a selected item to the external input device when any one item of the displayed data list is selected.

11. The method of claim 9 or 10, wherein the mobile terminal detects the event for the data input when a specific position of the mobile terminal screen is selected by the external input device.

12. The method of one of claims 9 to 11, wherein the external input device transmit data using a near field communication network.

13. The method of one of claims 9 to 12, wherein the near field communication network includes at least one of Bluetooth communication, WLAN communication, Ultra Wideband communication, and Infrared Data Association communication.

14. A mobile terminal comprising:
means for requesting to send stored data to an external input device; and
means for receiving the stored data from the external input device using a near field communication network.

15. The mobile terminal of claim 14, wherein the means for requesting, to send the stored data to the external input device, performs the steps of:
requesting a stored data list to the external input device;
displaying the received data list when the data list is received from the external input device; and
requesting transfer of a selected item to the external input device when any one item of the displayed data list is selected.

16. The mobile terminal of claim 14 or 15, wherein the mobile terminal detects the event for the data input when a specific position of the mobile terminal screen is selected by the external input device.

17. The mobile terminal of one of claims 14 to 16, wherein the external input device transmit data using a near field communication network.

18. The mobile terminal of one of claims 14 to 17, wherein the near field communication network includes at least one of Bluetooth communication, WLAN communication, Ultra Wideband communication, and Infrared Data Association communication.

19. The mobile terminal of one of claims 14 to 18, further comprising means for displaying the received data on a position of a screen of the mobile terminal.
